# EUROPEAN PATENT SPECIFICATION

(11) **EP 0 481 940 B1**
(45) Date of publication and mention of the grant of the patent: **30.10.1996**
(21) Application number: 91850225.3
(22) Date of filing: 16.09.1991
(51) Int. Cl.: A23G 3/00

(54) **A process for preparing a confectionery product, hard boiling, containing mainly sugar alcohols and abundant xylitol**
Herstellung eines stark kochenden Süsswarenproduktes, bestehend hauptsächlich aus Zuckeralkoholen und reichlich Xylit
Procédé pour la préparation d'un produit de confiserie fort cuisson contenant essentiellement des alcohols de sucre et une abondance de xylitol

(30) Priority: 18.10.1990 FI 905133
(43) Date of publication of application: 22.04.1992
(73) Proprietor: HUHTAMÄKI OY, SF-20100 Turku (FI)
(72) Inventor: Taskinen, Sakari, SF-20300 Turku (FI)
(74) Representative: Bergvall, Stina-Lena

(56) References cited:
- EP-A- 0 017 184
- EP-A- 0 370 761
- EP-A- 0 398 279
- WO-A-91/07100

## Description

The present invention is directed to a process for preparing a hard confectionery product containing mainly sugar alcohols and abundant xylitol. The hard confectionery product refers chiefly to candy and granular products.

Traditionally, hard candy like this is prepared from mixtures of saccharose and glucose syrup, the said mixtures being concentrated by evaporating the water, and of the mass thus obtained the final product is formed either by casting in moulds or by using confectionery rollers. These structurally "glasslike" confectionery products contain large amounts of saccharose and glucose syrup, which components are not particularly beneficial for the teeth. The aim has, therefore, been to replace the saccharose with xylitol and the glucose syrup with hydrogenated starch syrup or lactitol.

Finnish patent publication no. 61265 describes a process in which 10 - 30 % by weight of xylitol powder is added to a xylitol melt and the melt is maintained at a temperature not exceeding xylitol's melting point of 96°C. The melt obtained is poured into moulds and allowed to cool. This known process is not continuous, it is technically difficult to realize, and is thus not very well suited for industrial production.

Finnish patent application no. 885397 also describes a process for preparing candies containing xylitol and sugar alcohols. According to the process, a mixture containing xylitol and maltitol is melted and coarse xylitol powder is added to the melt and from the mixture thus obtained candies are formed. This process does not, however, lead to a satisfactory end result and the process cannot be used on an industrial scale due to the hygroscopicity of xylitol. The process produces a hygroscopic mixture which is difficult to work. It does not maintain its shape and is a perishable product.

When xylitol is used in preparing candy, a problem is presented by the fact that from xylitol cannot be made by boiling a mass which could be treated with a traditional confectionery roller, as the mass cannot be made to crystallize satisfactorily. Furthermore, if hard candy can be formed of a mixture consisting of xylitol and sugar alcohol, the final product is usually extremely hygroscopic and sticky.

To solve the above-mentioned problems, a process is now put forth in which xylitol, at least one additional sugar alcohol and possible additives are heated as least to the mixture's melting point; which process is characterized in that the mixture contains 2 - 10% by weight of xylitol, 45 - 70 % by weight of other sugar alcohols, e.g. maltitol, lactitol, and possibly at most 0.5 % by weight of emulsifier; that the mixture is cooled to about 110-120°C and while kept molten admixed with 10 - 20 % by weight coarse xylitol; that the mixture is cooled to about 92°C and admixed with 2 - 10 % by weight of xylitol and thereafter with a mixture containing 2 - 10 % by weight of xylitol, about 0.5 % by weight of fat and flavouring, and subsequently with about 10 - 20 % by weight of coarse xylitol; that the xylitol and/or xylitol-containing mixture is preheated before admixing the mixtures heated during mixing, and finally the mixture as obtained worked into the desired shape by conventional means, preferably with a confectionery roller; and that the percentages are calculated on the final weight of the mixture.

In the preferred embodiment, the xylitol and/or xylitol-containing mixture to be added to the mixture is preheated to about 45°C. The above mentioned preheatings facilitate mixing and reduce the hygroscopicity of the final product.

To the mixture may also be added additives generally used in the confectionery industry in order to improve the workability of the mixture, for example emulsifier, e.g. glycerol monostearate or lecithin.

The addition of fat flavouring to the mixture improves the texture and taste of the final product.

The coarse xylitol added last to the mixture is added under rapid mixing. In this way, some of the xylitol will remain in crystalline form and it is important that the temperature of the mass is over 60°C during the addition of xylitol, so that the mass remains homogeneous.

The invention is described in greater detail below with reference to the following examples.

### EXAMPLE 1

| | |
|---|---|
| "Lycasin" | 25.0 kg |
| xylitol | 1.2 kg |
| glycerol monostearate | 0.1 kg |

The mixture is boiled to 175°C and cooled in a vacuum to 120°C. The mass is transferred to a heating table and allowed to cool to 110°C. 5.0 kg of coarse xylitol is added while mixing well. The mass must be at a temperature of over 95°C throughout the mixing in order that the xylitol will melt. The mass is cooled to 92°C.

To the cooled mass is admixed 1.0 kg of coarse xylitol preheated to 45°C. Immediately after this, the following premixed mixture is added to the mass under rapid mixing:

| | |
|---|---|
| xylitol | 1.0 kg |
| molten coconut butter | 0.2 kg |
| flavouring | 0.1731 |

After this, the remaining 5.1 kg of preheated coarse xylitol is added evenly, under rapid mixing, to form a homogeneous mass. It should be ensured that mixing is carried out so that at the end of it the mass is at a temperature of at least 60°C.

The well-mixed mass is cooled to 45 - 50°C and worked with a traditional confectionery roller machine into the desired shape. The candy pieces obtained are non-sticky and keep their shape well.

The candy pieces are hard-granulated with xylitol until a total xylitol content of 50.0% is obtained for the product. If desired, the finished products may be polished.

The hard-granulation with xylitol is carried out by moistening the candy pieces in a grain drum with 72% xylitol solution to which 6% gum arabic solution (50% aqueous solution) has been added as a thickening agent. The moistened blanks are dried, moistening is repeated and the process is continued until the desired xylitol content is obtained for the final product.

### EXAMPLE 2

| | |
|---|---|
| "Lycasin" | 24.2 kg |
| xylitol | 2.12 kg |
| glycerol monostearate | 0.09 kg |

The mixture is boiled to 175°C and cooled in a vacuum to 120°C. The mass is transferred to a heating table and allowed to cool to 110°C. 6.68 kg of coarse xylitol is added while mixing well. The mass must be at a temperature of over 95°C throughout the mixing in order that the xylitol will melt. The mass is cooled to 92°C.

To the cooled mass is admixed 1.0 kg of coarse xylitol preheated to 45°C. Immediately after this, the following premixed mixture is added to the mass under rapid mixing:

| | |
|---|---|
| xylitol | 1.0 kg |
| molten coconut butter | 0.2 kg |
| flavouring | 0.1731 |

After this, the remaining 7.35 kg of preheated coarse xylitol is added evenly, under rapid mixing, to form a homogeneous mass. It should be ensured that mixing is carried out so that, when the mixing process is concluded, the mass is at a temperature of at least 60°C.

The well-mixed mass is cooled to 45 - 50°C and worked with a traditional confectionery roller machine into the desired shape. The candy pieces are non-sticky and maintain their shape well.

### EXAMPLE 3

| | |
|---|---|
| "Lycasin" | 24.5 kg |
| xylitol | 5.3 kg |
| glycerol monostearate | 0.09 kg |

The mixture is boiled to 175°C and cooled in a vacuum to 120°C. The mass is transferred to a heating table and allowed to cool to 110°C. 1.6 kg of coarse xylitol is added while mixing well. The mass must be at a temperature of over 95°C throughout the mixing in order that the xylitol will melt. The mass is cooled to 92°C.

To the cooled mass is admixed 1.0 kg of coarse xylitol preheated to 45°C. Immediately after this, the following premixed mixture is added to the mass under rapid mixing:

| | |
|---|---|
| xylitol | 1.0 kg |
| molten coconut butter | 0.2 kg |
| flavouring | 0.1731 |

After this, the remaining 5.0 kg of preheated coarse xylitol is added evenly, under rapid mixing, to form a homogeneous mass. It should be ensured that mixing is carried out so that when the mixing process is concluded, the mass is at a temperature of at least 60°C.

The well-mixed mass is cooled to 45 - 50°C. The mass thus obtained is extremely sticky and very difficult to work with a traditional confectionery roller machine. The candy pieces prepared in this way stick to each other and do not maintain their shape.

### EXAMPLE 4

| | |
|---|---|
| "Lycasin" | 24.5 kg |
| xylitol | 1.9 kg |

The mixture is boiled to 175°C and cooled in a vacuum to 120°C. The mass is transferred to a heating table and allowed to cool to 110°C. 5.0 kg of coarse xylitol is added while mixing well. The mass must be at a temperature of over 95°C throughout the mixing in order that the xylitol will melt. The mass is cooled to 92°C.

To the cooled mass is admixed 1.0 kg of coarse xylitol preheated to 45°C. Immediately after this, the following premixed mixture is added to the mass under rapid mixing:

| | |
|---|---|
| xylitol | 1.0 kg |
| flavouring | 0.1731 |

After this, the remaining 5.0 kg of preheated coarse xylitol is added evenly, under rapid mixing, to form a homogeneous mass. It should be ensured that mixing is carried out so that, when the mixing process is concluded, the mass is at a temperature of at least 60°C.

The well-mixed mass is cooled to 45 - 50°C. The mass thus obtained is somewhat sticky and very difficult to work with a traditional confectionery roller machine. The candy pieces prepared in this way are sticky and do not maintain their shape.

### EXAMPLE 5

| | |
|---|---|
| water | 6.2 kg |
| lactitol | 18.4 kg |
| xylitol | 1.9 kg |
| glycerol monostearate | 0.09 kg |

The mixture is boiled to 170°C and cooled in a vacuum to 120°C. The mass is transferred to a heating table and allowed to cool to 110°C. 5.0 kg of coarse xylitol is added while mixing well. The mass must be at a temperature of over 95°C throughout the mixing in order that the xylitol will melt. The mass is cooled to 92°C.

To the cooled mass is admixed 1.0 kg of coarse xylitol preheated to 45°C. Immediately after this, the following premixed mixture is added to the mass under rapid mixing:

| | |
|---|---|
| xylitol | 1.0 kg |
| molten coconut butter | 0.2 kg |
| flavouring | 0.1731 |

After this, the remaining 5.0 kg of preheated coarse xylitol is added evenly, under rapid mixing, to form a homogeneous mass. It should be ensured that mixing is carried out so that, when the mixing is concluded, the mass is at a temperature of at least 60°C.

The well-mixed mass is cooled to 45 - 50°C and worked with a traditional confectionery roller machine into the desired shape. The caramel shapes obtained are non-sticky and maintain their shape well.

### EXAMPLE 6

| | |
|---|---|
| water | 6.2 kg |
| "Palatines" | 18.4 kg |
| xylitol | 1.9 kg |
| glycerol monostearate | 0.09 kg |

The mixture is boiled to 175°C and cooled in a vacuum to 120°C. The mass is transferred to a heating table and allowed to cool to 110°C. 5.0 kg of coarse xylitol is added while mixing well. The mass must be at a temperature of over 95°C throughout the mixing in order that the xylitol will melt. The mass is cooled to 92°C.

To the cooled mass is admixed 1.0 kg of coarse xylitol preheated to 45°C. Immediately after this, the following premixed mixture is added to the mass under rapid mixing:

| | |
|---|---|
| xylitol | 1.0 kg |
| molten coconut butter | 0.2 kg |
| flavouring | 0.1731 |

After this, the remaining 5.0 kg of preheated coarse xylitol is added evenly, under rapid mixing, to form a homogeneous mass. It should be ensured that mixing is carried out so that, when the mixing is completed, the mass is at a temperature of at least 60°C.

The well-mixed mass is cooled to 45 - 50°C and worked with a traditional confectionery roller machine into the desired shape. The candy pieces obtained are non-sticky and maintain their shape well.

## Claims

1. A process for preparing a hard confectionery product containing mainly sugar alcohols and abundant xylitol in which process xylitol, at least one additional sugar alcohol and possible additives, are heated at least to the melting point of the mixture,
**characterized** in that the mixture contains 2 - 10 % by weight of xylitol, 45 - 70 % by weight of other sugar alcohols, e.g. maltitol, lactitol, and possibly at most 0.5% by weight of emulsifier; that the mixture is cooled to about 110 - 120°C and admixed, while kept molten, with 10 - 20 % by weight of coarse xylitol; that the mixture is cooled to about 92°C and admixed with 2 - 10 % by weight of xylitol and thereafter admixed with a mixture containing 2 - 10 % by weight of xylitol, about 0.5 % by weight of fat and flavouring, and subsequently with about 10 - 20 % by weight of coarse xylitol; that the xylitol and/or xylitol-containing mixture is preheated before admixing; the mixtures heated during mixing, and finally the mixture as obtained worked into the desired shape by conventional means, preferably with a confectionery roller; and that the percentages are calculated on the final weight of the mixture.

2. A process as claimed in claim 1, **characterized** in that the xylitol and/or xylitol-containing mixture before admixing is preheated to 45°C.

## Patentansprüche

1. Verfahren zum Herstellen eines harten Süßwarenprodukts, das hauptsächlich Zuckeralkohole und reichlich Xylit enthält, wobei in diesem Verfahren Xylit, mindestens ein zusätzlicher Zuckeralkohol und mögliche Zusatzstoffe mindestens bis zum Schmelzpunkt des Gemisches erwärmt werden,
**dadurch gekennzeichnet**, daß das Gemisch 2 - 10 Gew.-% Xylit, 45 - 70 Gew.-% andere Zuckeralkohole, z.B. Maltit, Lactit, und gegebenenfalls höchstens 0,5 Gew.-% Emulgator enthält; daß das Gemisch auf etwa 110 - 120°C abgekühlt wird und, während es im geschmolzenen Zustand gehalten wird, mit 10 - 20 Gew.-% groben Xylit vermischt wird; daß das Gemisch auf etwa 92°C abgekühlt wird und mit 2 - 10 Gew.-% Xylit vermischt wird und danach mit einem Gemisch, das 2 - 10 Gew.-% Xylit, etwa 0,5 Gew.-% Fett und Geschmacksstoff enthält, vermischt wird und anschließend mit etwa 10 - 20 Gew.-% groben Xylit vermischt wird; daß das Xylit und/oder xylithaltige Gemisch vor dem Vermischen vorgewärmt wird; die Gemische während des Vermischens erwärmt werden und schließlich das Gemisch, so wie es erhalten wurde, durch herkömmliche Mittel, vorzugsweise mit einer Walze für die Süßwarenherstellung (confectionery roller), in die gewünschte Form gebracht wird; und daß die Prozentsätze auf das Endgewicht des Gemisches bezogen sind.

2. Verfahren nach Anspruch 1, **dadurch gekennzeichnet**, daß das Xylit und/oder xylithaltige Gemisch vor dem Vermischen auf 45°C vorgewärmt wird.

## Revendications

1. Procédé pour la préparation d'un produit de pâtisserie dur contenant principalement des alcools de sucre et du xylitol en abondance, procédé dans lequel le xylitol, au moins un alcool de sucre supplémentaire et des additifs éventuels, sont chauffés au moins jusqu'au point de fusion du mélange,
caractérisé en ce que le mélange contient 2 - 10 % en poids de xylitol, 45 - 70 % en poids d'autres alcools de sucre, par exemple du maltitol, du lactitol, et éventuellement au plus 0,5 % en poids d'émulsifiant ; en ce que le mélange est refroidi jusqu'à environ 110 - 120°C et en ce qu'on y ajoute et mélange, tout en maintenant à l'état de fusion, 10 - 20 % en poids de xylitol grossier ; en ce que le mélange est refroidi jusqu'à environ 92°C et en ce que l'on ajoute et mélange 2 - 10 % en poids de xylitol et ensuite en ce que l'on ajoute un mélange contenant 2 - 10 % en poids de xylitol, environ 0,5 % en poids de matière grasse et d'édulcorant, et consécutivement environ 10 - 20 % en poids de xylitol grossier ; en ce que le xylitol et/ou le mélange contenant le xylitol est préchauffé avant addition et mélange ; les mélanges sont chauffés pendant l'opération de mélange, et enfin le mélange, tel qu'il est obtenu, est transformé en la forme souhaitée par des moyens classiques, de préférence à l'aide d'un rouleau à pâtisserie ; et en ce que les pourcentages sont calculés sur le poids final du mélange.

2. Procédé selon la revendication 1, caractérisé en ce que le xylitol et/ou le mélange contenant le xylitol est préchauffé jusqu'à 45°C avant addition et mélange.
